# EUROPEAN PATENT APPLICATION

(11) **EP 0 532 799 A1**
(43) Date of publication of application: **24.03.1993**
(21) Application number: 91202366.0
(22) Date of filing: 18.09.1991
(51) Int. Cl.: B28D 1/04, B28D 7/04, B27B 25/04

(54) **Parting-off machine for corner bricks and stones**

(71) Applicant: van Wijk, Johannes Wilhelmus, NL-6533 BL Nijmegen (NL)
(72) Inventor: van Wijk, Johannes Wilhelmus, NL-6533 BL Nijmegen (NL)

(57) **Abstract**

A machine for making corner bricks or stones comprising two saw saw blades (9,10), that are adjustable according to angle and depth of cut, further comprising a first chain (6) and a second chain (5), which cooperatively feed the stock (5) into engagement with the saw blades (9,10), the first chain (6) carrying the sawn product from the cutting station, and the second chain (5) discharging the remnant part (12) of the stock.

## Description

The present invention relates to a PARTING-OFF machine for cutting off cover brick and stone corners.

### Background of the invention

Various types of parting-off machines equiped with cutting disc and devoted to the cutting of flat pieces and bricks, are already well known on the market. In this respect, for example, as there is a machine prior to a Spanish patent No. 554015 and a Dutch patent No.8402639,which has a motor assembly with cooling systems and a conveyor-belt or chain-drive. The motor assembly which operates the cutting-disc, is mounted oscilating, beside a water cooling system in such a way that with respect to the support surface of the work table, which is arranged inclined and is fitted with guide rule for pieces to be cut, whose position is adjustable and fixed at will, but however only in one direction at ones. This disadvantage further results in a relatively high cost price, making it uneconomic for small industries. The invention as claimed is intended to remedy these drawbacks. It solves the problem by cutting brick and stone corners in one action.

### Discription of the invention

The machine object to the invention, was made and conceived using two diamond cutting discs with two seperate motors to produce a 90° cut simultaneously, so brick stripes will not have a seam when installed. The machine has a gear box with motor, which moves two chains simultaneously in two directions, on the chains are instruments (positioners) to move bricks or stones into the cutting discs, after cutting to a ready product gutter and a leavings gutter. The machine has further-more a conveyorbelt for the movement of bricks to be cut and a pneumatic cylinder to move the bricks into the chain.

### Brief discription of the drawings

For a better understanding of what has been exponded, drawings have been attached which schematically and solely by way of example without restrictive nature of any sort, represent a practical example of a machine with indicated characteristics.

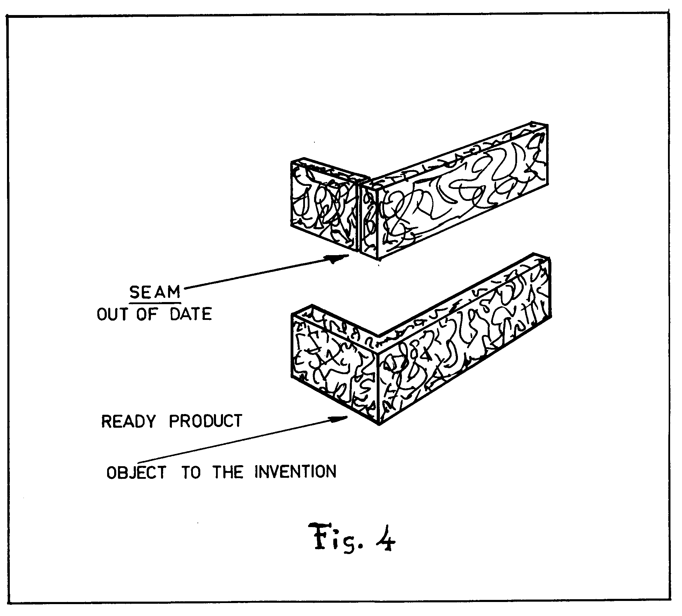

On drawing Fig. 4 is shown a ready product and a product out of date.

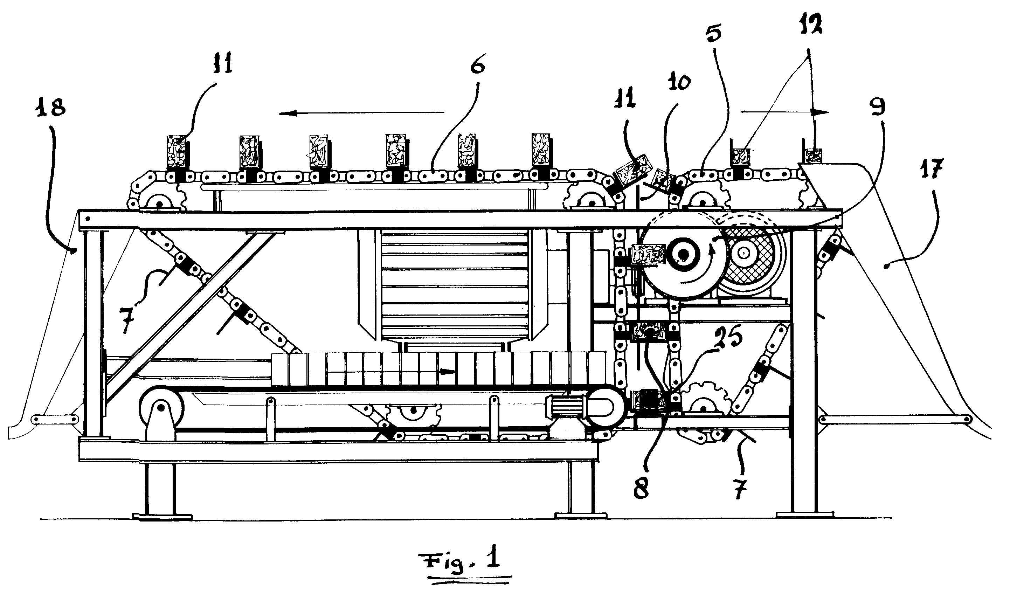

On drawing Fig. 1 is a side view of the example where 5 is the remnant-conveyance-chain, 6 the ready product conveyance chain, 7 are brick or stone support instruments which, when they meet at point 25,form a stable box around the brick or stone 8 and move the brick or stone into the cutting area of the cutting discs 9 and 10, 11 are ready products (angled brick or stone corners),12 are remnants, 17 is a remnants gutter and 18 the ready product gutter.

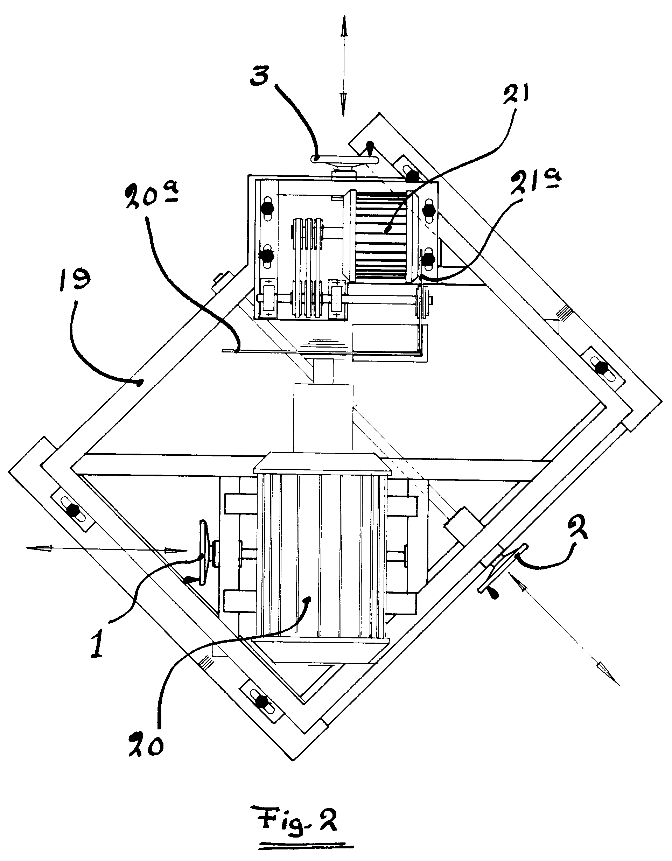

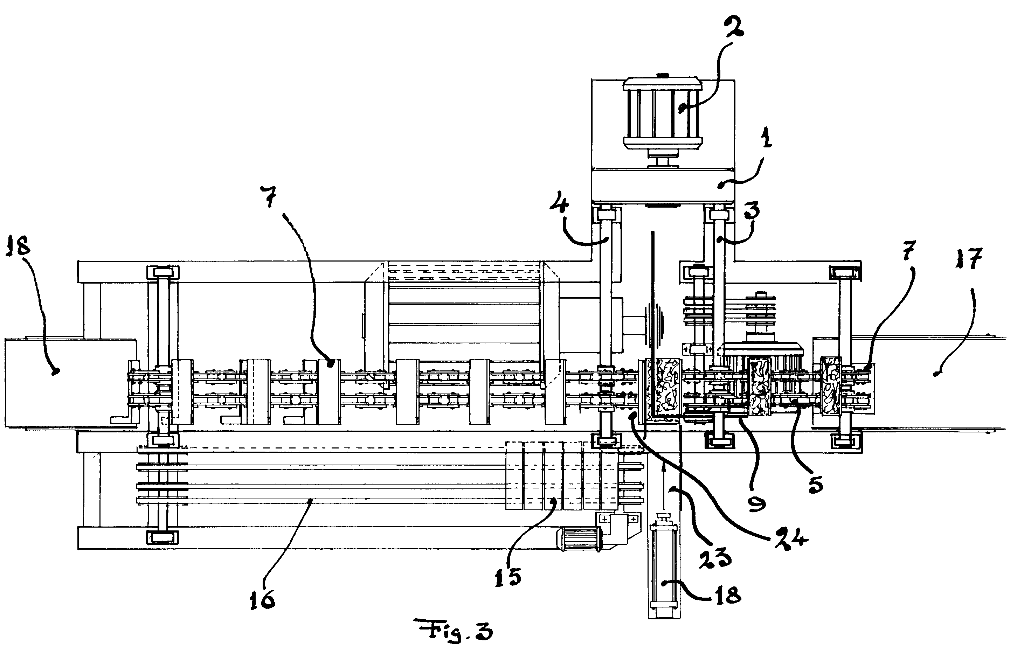

On drawing Fig. 2 a top view of the cutting-discs structure in which 1, 2 and 3 are adjusters, 19 framework, 20 motor, 20a diamond cutting disc, 21 motor and 21a diamond cutting disc. The total is installed free from the machine and diagonaly placed, this as an example seperately from the drawings Fig. 1 and Fig. 3.

On drawings Fig. 3; 1 is the gearbox motor, 3 and 4 are the shafts for the chain-drive. 5 and 6, 8 is a brick or stone during cutting, 9 and 10 diamond cutting discs, 15 brick or stone to be cut, 16 is a conveyance belt, 23 is the brick or stone station and 18 is a pneumatic cylinder which positions the bricks or stones on a command of a photo-cel 24. It is selfevident that cool-water is continiously present on the cutting discs.

### Discription of an example machine in operation

With the machine according to the invention, is on drawing Fig.3 shown a motor 2 and a gearbox 1, the shafts 3 and 4 shall run in opposite direction of each other to move the chaines 5 and 6 in directions as shown on drawing Fig.1. Fixed to the chain, are instruments 7,to support the bricks or stones, leads the bricks or stones to the cutting discs 9 and 10 and further to the gutters 12 and 14 where gutter 12 is the final product gutter.At the structure according to the invention,bricks or stones 8 will via the conveyance belt 16 be moved to the station 23, after a signal, given by photo-cel 24, a pneumatic cylinder moves the brick or stone into the machine at the same moment that the chain-brick-stone-support 7 ond drawing Fig. 1 is in the right position to receive a brick or stone,because the chain 5 and 6 move simultaneously and therefore the fixed instruments on the chain position 7 together form a box around the brick or stone 8, just before entering the cutting-discs 9 and 10, the brick or stone 8 will be moved further upwards trough the cutting-discs untill total separation in one part the 90° corner brick or stone 11 and another part 12 to the respectively gutters 18 and 17.

## Claims

1. Parting-off-machine for corner bricks and stones
Machine to cut bricks and stones into a corner piece in one action by moving bricks or stones into two fixed cutting discs which cutting discs are so placed that a corner brick or stone will be cut by moving the bricks or stones through two simultaneous chains, which chains have fixed instruments to enclose the bricks or stones in a stable way through the cutting discs.

2. Parting-off-machine for corner bricks and stones
A machine as claimed in claim 1 where in the chain has pockets where different instruments for different bricks or stones can be installed.

3. Parting-off-machine for corner bricks and stones
A machine as claimed in claim 1 and 2,where in the cutting-discs have changeable angles.

4. Parting-off-machine for corner bricks and stones
A machine as claimed in claim 1, 2 and 3 where in the cutter-discs with motors are fixed on a construction seperate from the machine to change thickness of the corner bricks or stones in one or two ways.

5. Parting-off-machine for corner bricks and stones
A machine as claimed in claim 1, 2, 3 and 4 where in a band-saw does the work instead of cutting-discs.
